# EUROPÄISCHE PATENTSCHRIFT

(11) **EP 3 440 381 B1**
(45) Veröffentlichungstag und Bekanntmachung des Hinweises auf die Patenterteilung: **22.12.2021**
(21) Anmeldenummer: 17709040.4
(22) Anmeldetag: 06.03.2017
(51) Int. Cl.: F16F 15/14

(54) **KUPPLUNGSSYSTEM MIT EINER SCHWINGUNGSDÄMPFUNGSANORDNUNG, INSBESONDERE FÜR EINEN ANTRIEBSSTRANG EINES FAHRZEUGS**
CLUTCH SYSTEM WITH A VIBRATION-DAMPING ASSEMBLY, IN PARTICULAR FOR A DRIVE TRAIN OF A VEHICLE
SYSTEM D'EMBRAYAGE AVEC UN DISPOSITIF D'AMORTISSEMENT DES VIBRATIONS DE TORSION DESTINÉ À LA CHAÎNE CINÉMATIQUE D'UN VÉHICULE

(30) Priorität: 05.04.2016 DE 102016205594
(43) Veröffentlichungstag der Anmeldung: 13.02.2019
(73) Patentinhaber: ZF Friedrichshafen AG, 88046 Friedrichshafen (DE)
(72) Erfinder: JONCKHEERE, Luc, 97440 Werneck (DE); HOFMANN, Edmont, 97464 Niederwerrn (DE)
(74) Vertreter: ZF Friedrichshafen AG
(86) Internationale Anmeldenummer: PCT/EP2017/055110
(87) Internationale Veröffentlichungsnummer: WO 2017/174268

(56) Entgegenhaltungen:
- DE-A1- 3 741 701
- DE-A1- 10 110 671
- DE-A1- 10 248 133
- DE-A1-102010 049 553
- DE-A1-102010 049 929
- DE-A1-102012 214 680
- GB-A- 2 149 060
- US-A1- 2002 017 443
- US-A1- 2011 031 083

## Beschreibung

Die vorliegende Erfindung betrifft ein Kupplungssystem mit einer Schwingungsdämpfungsanordnung für einen Antriebsstrang eines Fahrzeugs. Diese Schwingungsdämpfungsanordnung umfasst einen in Schwingungsbewegung versetzbaren Auslenkungsmassenträger sowie eine an dem Auslenkungsmassenträger getragene Auslenkungsmassenanordnung.

Um die in einem Antriebsstrang eines Fahrzeugs auftretenden Drehschwingungen zu mindern, ist es bekannt, Schwingungsdämpfungsanordnungen in Form von Zwei-Massen-Schwungrädern oder Torsionsschwingungsdämpfern in den Drehmomentenfluss einzubinden. Derartige Schwingungsdämpfungsanordnungen umfassen eine Primärseite und eine Sekundärseite, wobei die Primärseite an ein Antriebsaggregat oder den antriebsaggregatseitigen Bereich eines Antriebsstrangs angebunden ist und die Sekundärseite an ein Getriebe oder den getriebeseitigen Bereich eines Antriebsstrangs angebunden ist. Zwischen der Primärseite und der Sekundärseite wirken elastische Elemente, wie z. B. Schraubendruckfedern, gegen deren Rückstellwirkung die Primärseite und die Sekundärseite bezüglich einander verdrehbar bzw. auslenkbar sind.

Eine allgemein als Tilger bezeichnete alternative Ausgestaltungsart einer Schwingungsdämpfungsanordnung umfasst einen Auslenkungsmassenträger und eine daran getragene Auslenkungsmassenanordnung. Der Auslenkungsmassenträger ist an eine Antriebsstrangkomponente angekoppelt und mit dieser zusammen um eine Drehachse der Antriebsstrangkomponente drehbar. Bei Auftreten von Drehungleichförmigkeiten bzw. Drehschwingungen wird der Auslenkungsmassenträger in eine der Rotationsbewegung überlagerte Schwingungsbewegung versetzt. Die Auslenkungsmassenanordnung ist durch eine Rückstellkrafterzeugungsanordnung mit dem Auslenkungsmassenträger gekoppelt, so dass bei Auftreten von Drehschwingungen und entsprechender Schwingungsbewegung des Auslenkungsmassenträgers die Auslenkungsmassenanordnung gegen die Rückstellkraft der Rückstellkrafterzeugungsanordnung bezüglich des Auslenkungsmassenträgers ausgelenkt und in eine zur Tilgung der auftretenden Schwingungen beitragende Schwingungsbewegung bezüglich des Auslenkungsmassenträgers versetzt wird. Charakteristisch für eine derartige Art der Schwingungsdämpfungsanordnung ist, dass diese nicht im Drehmomentenfluss liegt, also die in einem Antriebsstrang zur übertragenden Drehmomente nicht über die Rückstellkrafterzeugungsanordnung und die Auslenkungsmassenanordnung derselben geleitet werden.

Aus der WO 2004/018897 ist eine derartige allgemein als Tilger bezeichnete Schwingungsdämpfungsanordnung für den Antriebsstrang eines Fahrzeugs bekannt. Diese bekannte, mit einem Feder-Masse-System aufgebaute Schwingungsdämpfungsanordnung ist mit ihrem Auslenkungsmassenträger beispielsweise im Bereich eines Hinterachsgetriebes, einer davon weg führenden Seitenwelle oder einer Gelenkwelle des Antriebsstrangs angeordnet.

Aus der US2002017443 ist eine Kupplungsscheibe mit einer integrieren Schwingungsdämpfungsanordnung bekannt.

Es ist die Aufgabe der vorliegenden Erfindung, eine gattungsgemäße Schwingungsdämpfungsanordnung so weiterzubilden, dass diese ein verbessertes Schwingungsdämpfungsverhalten aufweist.

Erfindungsgemäß wird diese Aufgabe gelöst durch ein Kupplungssystem nach Anspruch 1, umfassend wenigstens eine Schwingungsdämpfungsanordnung für einen Antriebsstrang eines Fahrzeugs, umfassend einen in Schwingungsbewegung versetzbaren Auslenkungsmassenträger sowie eine an dem Auslenkungsmassenträger getragene Auslenkungsmassenanordnung.

Dabei ist weiter vorgesehen, dass die Auslenkungsmassenanordnung durch eine Rückstellkrafterzeugungsanordnung mit dem Auslenkungsmassenträger derart gekoppelt ist, dass bei unter einer Schwellenbeschleunigung liegender Beschleunigung des Auslenkungsmassenträgers die Auslenkungsmassenanordnung bezüglich des Auslenkungsmassenträgers in einer Ruhelage im Wesentlichen fest gehalten ist und bei über der Schwellenbeschleunigung liegender Beschleunigung des Auslenkungsmassenträgers die Auslenkungsmassenanordnung gegen eine durch die Rückstellkrafterzeugungsanordnung erzeugte Rückstellkraft und /oder durch eine durch eine Reibeinrichtung erzeugte Haltekraft bezüglich des Auslenkungsmassenträgers aus der Ruhelage auslenkbar ist. Dabei ist zu erwähnen, dass die Reibeinrichtung sich einerseits an dem Auslenkungsmassenträger und andererseits an der Auslenkungsmassenanordnung, die zum Auslenkungsmassenträger relativ verschiebbar ist, abstützt bzw. reibt.

Bei dem erfindungsgemäßen Aufbau einer Schwingungsdämpfungsanordnung findet abhängig von der Beschleunigung, mit welcher der Auslenkungsmassenträger insbesondere bei Durchführung von Schwingungsbewegungen beschleunigt wird, ein Umschalten statt. Bei vergleichsweise geringer Beschleunigung ist die gesamte Schwingungsdämpfungsanordnung mit dem Auslenkungsmassenträger und der daran getragenen Auslenkungsmassenanordnung als im Wesentlichen starre Masse wirksam, die als solche zur Erhöhung des Trägheitsmoments beiträgt. Nimmt die Beschleunigung zu und überschreitet die Schwellenbeschleunigung, so kann die Auslenkungsmassenanordnung eine Relativbewegung bezüglich des Auslenkungsmassenträgers, insbesondere also auch eine Relativschwingungsbewegung bezüglich diesem unter der Rückstellwirkung der Rückstellkrafterzeugungsanordnung und /oder durch eine durch eine Reibeinrichtung erzeugte Haltekraft ausführen, so dass die Schwingungsdämpfungsanordnung in diesem Zustand als Tilger wirksam ist. Grundlage dieses erfindungsgemäßen Aufbaus ist die Erkenntnis, dass derartige als Tilger mit einem Auslenkungsmassenträger und einer Auslenkungsmassenanordnung wirksame Schwingungsdämpfungsanordnungen grundsätzlich zum Auftreten eines Nebenmaximums bei höherer Frequenz, im Antriebsstrang also bei höherer Drehzahl bezüglich eines Hauptmaximums, führen. Da mit zunehmender Frequenz, also auch mit zunehmender Drehzahl in einem Antriebsstrang, im Allgemeinen auch die bei Auftreten von Drehungleichförmigkeiten entstehenden Beschleunigungen abnehmen, nutzt die Erfindung den Effekt, dass mit zunehmender Drehzahl und dementsprechend auch abnehmender Beschleunigung des Auslenkungsmassenträgers durch das Umschalten in einen im Wesentlichen starren Kopplungszustand das Auftreten des Nebenmaximums bei zunehmender Drehzahl bzw. Anregungsfrequenz vermieden wird.

Eine nicht erfindungsgemässe Ausführungsform sieht vor, dass die Auslenkungsmassenanordnung zumindest aus einem Massering mit einer daran drehfest befestigten Zentralscheibe gebildet ist und der Auslenkungsmassenträger durch zumindest eine Deckscheibe gebildet ist. Vorteilhaft werden zwei Deckscheiben verwendet, die beidseitig der Zentralscheibe verbaut sind.

Bei einer nicht erfindnungsgemässen Ausführung kann es vorgesehen sein, dass die Auslenkungsmassenanordnung zumindest aus einer Deckscheibe gebildet wird. Vorzugsweise werden hier jedoch zwei Deckscheiben verbaut, die beidseitig der Zentralscheibe angeordnet sind und die eigentliche Auslenkungsmasse bilden.

Um einen stabilen, gleichwohl zuverlässig wirkenden Aufbau bereitstellen zu können, wird vorgeschlagen, dass eine Baugruppe von Auslenkungsmassenträger und Auslenkungsmassenanordnung eine Zentralscheibe und die andere Baugruppe von Auslenkungsmassenträger und Auslenkungsmassenanordnung beidseits der Zentralscheibe jeweils eine Deckscheibe umfasst oder/und dass die Rückstellkrafterzeugungsanordnung wenigstens eine in ihren beiden Endbereichen bezüglich der Zentralscheibe und wenigstens einer Deckscheibe abgestützte oder abstützbare Federeinheit umfasst.

Zur Zusammenwirkung der im Allgemeinen mit Schraubendruckfedern aufgebauten Federeinheiten mit der Zentralscheibe bzw. den Deckscheiben kann vorgesehen sein, dass in wenigstens einem, vorzugsweise beiden Endbereichen wenigstens eine Federeinheit über ein Abstützorgan bezüglich der Zentralscheibe und wenigstens einer Deckscheibe abgestützt oder abstützbar ist. Auf diese Art und Weise wird eine gleichmäßige und eine punktuelle Belastung der Federeinheiten bzw. der Zentralscheibe und der Deckscheibe vermeidende Abstützwechselwirkung erzielt.

Zur Bereitstellung des vorangehend angesprochenen Umschaltverhaltens kann erfindungsgemäß vorgesehen sein, dass durch die Rückstellkrafterzeugungsanordnung oder die Reibeinrichtung die Auslenkungsmassenanordnung unter Erzeugung einer Vorspannkraft bzw. Haltekraft in die Ruhelage bezüglich des Auslenkungsmassenträgers vorgespannt ist, wobei bei Überschreiten der Schwellenbeschleunigung die Auslenkungsmassenanordnung unter Überwindung der Vorspannkraft bzw. der Haltekraft aus der Ruhelage bezüglich des Auslenkungsmassenträgers auslenkbar ist. Durch das Vorspannen bzw. das Halten der Auslenkungsmassenanordnung in die Ruhelage ist gewährleistet, dass erst dann, wenn eine die Vorspannung überwindende Kraft auf die Auslenkungsmassenanordnung wirkt, diese beginnt, sich bezüglich des Auslenkungsmassenträgers zu bewegen bzw. zu schwingen. Die auf den Auslenkungsmassenträger wirkende Kraft ist im Wesentlichen bestimmt durch die Masse bzw. das Massenträgheitsmoment der Auslenkungsmassenanordnung und die Beschleunigung, mit welcher diese bzw. der Auslenkungsmassenträger in Bewegung versetzt wird.

Um in einfacher Art und Weise diese Vorspannung in die Ruhelage bereitstellen zu können, wird vorgeschlagen, dass wenigstens eine, vorzugsweise jede Federeinheit zur Bereitstellung der Vorspannkraft in der Ruhelage der Auslenkungsmassenanordnung bezüglich des Auslenkungsmassenträgers in ihren beiden Endbereichen unter Vorspannung bezüglich der Zentralscheibe oder/und wenigstens einer Deckscheibe abgestützt ist.

Zur definierten Vorgabe des Schwingungsverhaltens der Auslenkungsmassenanordnung ist es vorgesehen, dass wenigstens eine, vorzugsweise jede Federeinheit eine Mehrzahl von parallel wirkenden Federn oder/und eine Mehrzahl von seriell wirkenden Federn umfasst.

Insbesondere bei Integration in einen Antriebsstrang eines Fahrzeugs ist aufgrund der darin im Allgemeinen auftretenden rotatorischen Bewegungen vorzugsweise vorgesehen, dass der Auslenkungsmassenträger in Drehbewegung um eine Drehachse versetzbar ist, und dass bei Auslenkung der Auslenkungsmassenanordnung aus der Ruhelage bezüglich des Auslenkungsmassenträgers die Auslenkungsmassenanordnung eine Rotationsbewegung bezüglich des Auslenkungsmassenträgers um die Drehachse D durchführt.

Um eine vorteilhafte Wirkweise der Federeinheit sicher zu stellen, wird vorgeschlagen, die Federn der Federeinheit in ihrer Wirkrichtung in Umfangsrichtung um die Drehachse D angeordnet sind.

Um ein möglichst hohes Massenträgheitsmoment der Auslenkungsmassenanordnung zu erhalten, sind die eigentliche Auslenkungsmasse bildenden Deckscheiben radial außerhalb der Federeinheit zusammengeführt. Hierdurch kann ein hohes Massenträgheitsmoment bei einem gleichzeitig geringen axial notwendigen Bauraum erzielt werden.

Um die Funktion der Schwingungsdämpfungsanordnung weiter zu verbessern wird vorgeschlagen, dass die Deckscheiben radial außerhalb der Federeinheit drehfest miteinander verbunden sind. Gleichzeitig kann so eine axiale Sicherung der Auslenkungsmassenanordnung zu der Zentralscheibe erzielt werden, da die Deckscheiben, die die Auslenkungsmasse bilden, die Zentralscheibe an beiden Seiten begrenzen.

Für die drehfeste Verbindung der Deckscheiben wir weiter vorgeschlagen, dass dies durch eine Klebeverbindung und / oder eine Schweißverbindung und / oder eine Nietverbindung und / oder eine Verstemmung und / oder eine Verschraubung erfolgt. Dabei soll dies nicht abschließend sein, sondern nur beispielhaft.

Für eine kostengünstige Herstellung wird weiter vorgeschlagen, dass die beiden Deckscheiben baugleich sind.

Um das Massenträgheitsmoment der Auslenkungsmassenanordnung weiter zu erhöhen kann zwischen den beiden Deckscheiben eine zusätzliche Massescheibe positioniert werden.

Um die Massescheibe funktionssicher und drehfest mit den Deckscheiben zu verbinden wird weiter vorgeschlagen, dass dies mittels einer Klebeverbindung und / oder einer Schweißverbindung und / oder einer Nietverbindung und / oder einer Verstemmung und / oder einer Verschraubung erfolgt. Dabei soll diese Aufzählung nicht abschließend sondern nur beispielhaft sein.

Weiter wird vorgeschlagen, dass die Reibeinrichtung zwischen den beiden Deckscheiben positioniert wird.

Dabei kann die Reibeinrichtung zumindest eine Federscheibe umfassen, wobei die Federscheibe sich einerseits an einer der beiden Deckscheiben und andererseits an der Zentralscheibe abstützt.

Um eine weitere Verbesserung der Funktion der Reibeinrichtung zu gewährleisten wird weiter vorgeschlagen, dass die Reibeinrichtung zumindest eine zusätzliche Reibscheibe umfasst. Hierdurch kann ein Verschleiß der Reibeinrichtung verringert und damit die Haltbarkeit verbessert werden.

Um eine vorteilhafte Funktionsweise der Reibeinrichtung zu gewährleisten wird vorgeschlagen, dass die Reibeinrichtung radial außerhalb der Federeinheit angeordnet ist. Je größer der Reibdurchmesser ist, desto niedriger kann die axiale Kraft der Federscheibe ausgeführt sein, bei gleicher Reibkraft.

Es kann aber auch vorteilhaft sein, beispielsweise durch einen vorhandenen Bauraum, dass die Reibeinrichtung radial innerhalb der Federeinheit angeordnet ist.

Dabei ist die Reicheinrichtung vorteilhaft so auszulegen, dass eine axiale Kraft der Federscheibe der Reibeinrichtung in eingebautem Neuzustand nahezu gleich einer axialen Kraft der Federscheibe der Reibeinrichtung in einem maximalen Verschleißzustand ist. Hierzu ist eine typische Kraft- Weg- Kennlinie der Membranfeder vorteilhaft, die dieses Verhalten zeigt. Dabei kann die Federscheibe so eingebaut werden, dass bei einem beginnenden Verschleiß der Reibeinrichtung und damit eine Verringerung einer axialen Einbaulage der federscheibe zunächst die Kraft ansteigt, um dann wieder abzusinken. Somit kann eine Einbaulage der Federscheibe so gewählt werden, dass die Federscheibe im Neuzustand nahezu die gleiche Kraft aufweist wie in einem maximalen Verschleißzustand.

Weiter wird vorgeschlagen, dass ein Element Stahl einen Volumenanteil an der gesamten Schwingungsdämpfungsanordnung von größer 90% hat.

Weiter wird vorgeschlagen, dass ein Gewichtsanteil von Stahl einen Volumenanteil von größer 90% an der Schwingungsdämpfungsanordnung hat.

Um eine optimale Funktionsweise der Schwingungsdämpfungsanordnung sicher zu stellen wird vorgeschlagen, dass das Vorspannmoment der Federeinheit maximal dem Produkt aus maximaler Eingangswellenbeschleunigung und der Massenträgheit der Schwingungsdämpfungsanordnung entspricht

Es wird weiter vorgeschlagen, dass ein Wert des Coulombschen Reibmoments der Reibeinrichtung maximal dem Produkt aus der maximaler Eingangswellenbeschleunigung und der Massenträgheit der Schwingungsdämpfungsanordnung entspricht.

Für die Funktionsweise kann es weiter vorteilhaft sein, dass eine Kennlinie der Rückstellkrafterzeugungsanordnung mehrstufig oder stufenlos degressiv verläuft.

Für die Funktionsweise kann es weiter vorteilhaft sein, dass eine Kennlinie der Rückstellkrafterzeugungsanordnung mehrstufig oder stufenlos progressiv verläuft.

Um die Funktionsweise der Federeinheit optimal zu gewährleistenkann diese aus Schraubenfedern und/oder aus Kunststofffedern und/oder aus Blattfedern bestehen.

Weiter wird ein Kupplungssystem für ein Fahrzeug beansprucht, das wenigstens eine Schwingungsdämpfungsanordnung in der vorangehend beschriebenen Ausführung enthält.

Dabei zeichnet sich das Kupplungssystem dadurch aus, dass es eine Schwungmasse, die mit einem Ausgangselement eines Antriebsaggregates drehfest verbunden ist und eine Reibfläche aufweist, sowie eine Druckplattenanordnung mit einer Druckplatte, die drehfest mit der Schwungmasse verbunden ist und durch eine Membranfeder mit einer axialen Kraft beaufschlagt werden kann, sowie einer Ausrückanordnung mit einem Ausrückring für die Membranfeder sowie einer Kupplungsscheibenanordnung umfassend eine Belaganordnung, die zwischen der Reibfläche der Schwungmasse und der Druckplatte einklemmbar ist, wobei die Kupplungsscheibenanordnung weiter ein Ausgangselement umfasst, das gegen die Wirkkraft einer Federeinheit und in Wirkverbindung eines Eingangselements, welches drehfest mit der Belaganordnung verbunden ist und um die Drehachse (D) verdrehbar ist, wobei das Ausgangselement der Kupplungsscheibenanordnung drehfest mit einer Getriebeeingangswelle einer Getriebeanordnung verbunden ist. Dabei handelt es sich hier
bei dem Kupplungssystem um ein bekanntes System mit einer gefederten Kupplungsscheibenanordnung. Dies bedeutet, dass die Kupplungsscheibenanordnung eine Primärseite und eine, gegen die Wirkkraft einer Federeinheit relativ verdrehbare Sekundärseite aufweist. Dabei ist die Schwingungsdämpfungsanordnung drehfest mit der Sekundärseite der Kupplungsscheibenanordnung verbunden, die wiederum mit einer Eingangsseite, vorteilhaft eine Getriebeeingangswelle, einer Getriebeanordnung wirkverbunden ist. Hierdurch kann die Tilgungswirkung der Schwingungsdämpfungsanordnung vorteilhaft wirken. Dabei kann die Schwingungsdämpfungsanordnung zu beiden Seiten der Kupplungsscheibenanordnung positioniert sein.

Eine weitere vorteilhafte Ausführungsform sieht vor, dass der Auslenkungsmassenträger der Schwingungsdämpfungsanordnung drehfest mit dem Ausgangselement der Kupplungsscheibenanordnung oder drehfest mit der Getriebeeingangswelle verbunden ist.

Dabei ist es vorteilhaft, wenn die drehfeste Verbindung des Auslenkungsmassenträgers mit dem Ausgangselement der Kupplungsscheibenanordnung oder der Getriebeeingangswelle durch eine Verzahnung oder/ und durch eine Vernietung oder/und durch eine Verschweißung oder/und durch ein Verstemmen oder/und durch ein Verschrauben oder/und durch eine Verklebung erfolgt. Dabei soll diese Aufzählung nicht abschließend, sondern nur beispielhaft sein.

Um weiter die Funktion optimal zu gewährleisten wird vorgeschlagen, dass die geringste axiale Erstreckung der Auslenkungsmassenanordnung sich radial außerhalb des Ausrückringes befindet.

Weiter kann es für die Wirkung der Drehschwingungsdämpfungsanordnung vorteilhaft sein, wenn die geringste axiale Erstreckung der Auslenkungsmassenanordnung sich im radialen Bereich der Federeinheit der Kupplungsscheibenanordnung befindet.

Weiter wird vorgeschlagen, dass die Federeinheit der Schwingungsdämpfungsanordnung radial innerhalb der Federeinheit der Kupplungsscheibenanordnung angeordnet ist.

Um eine sichere Funktion und eine einfache Montage zu gewährleisten wird vorgeschlagen, dass ein Außendurchmesser der Auslenkungsmassenanordnung geringer ist als ein Innendurchmesser der Reibfläche der Schwungmasse oder geringer ist als ein Innendurchmesser der Druckplatte.

Eine weitere vorteilhafte Variante sieht vor, dass der Außendurchmesser der Auslenkungsmassenanordnung das Produkt von einem Faktor 0,9 bis 1,1 und dem Außendurchmesser der Deckbleche der Kupplungsscheibenanordnung ist.

Auch kann es günstig sein, wenn der Außendurchmesser der Auslenkungsmassenanordnung 0,9 bis 1,1 mal dem Innendurchmesser der Belaganordnung der Kupplungsscheibenanordnung ist.

Eine günstige Auslegung der Schwingungsdämpfungsanordnung kann vorsehen, dass ein Massenträgheitsmoment der Schwingungsdämpfungsanordnung zwischen 15% und 25% der Gesamtmassenträgheit von der Schwingungsdämpfungsanordnung und der Kupplungsscheibenanordnung (88) beträgt.

Um eine optimale Schwingungsdämpfung zu erhalten wird weiter vorgeschlagen, dass die Schwingungsdämpfungsanordnung auf eine Rassel-Eigenfrequenz abgestimmt wird.

Auch kann es vorteilhaft sein, wenn die Schwingungsdämpfungsanordnung auf eine Eigenfrequenz von 25 bis 60 Hz abgestimmt wird.

Daneben wird für unterschiedliche Antriebsaggregate vorgeschlagen, dass ein Massenträgheitsmoment der Auslenkungsmassenanordnung für Fahrzeuge mit einem Eingangsdrehmoment des Antriebsaggregates von mehr als 3000 Nm zwischen 0,02 kgm² und 0,1 kgm² beträgt.

Hingegen für Fahrzeuge mit einem Eingangsdrehmoment des Antriebsaggregates von mehr als 2000 Nm und weniger als 3000Nm soll das Massenträgheitsmoment der Auslenkungsmassenanordnung zwischen 0,01 kgm² und 0,06 kgm² betragen.

Weiter wird vorgeschlagen, dass die Schwingungsdämpfungsanordnung an der Kupplungsscheibenanordnung auf der der Schwungmassenanordnung zugewandten Seite und/oder auf der der Membranfeder der Druckplattenanordnung zugewandten Seite angeordnet ist.

Die vorliegende Erfindung wird nachfolgend mit Bezug auf die beiliegenden Figuren detailliert beschrieben. Es zeigt:
Fig. 1 in perspektivischer Darstellung eine Schwingungsdämpfungsanordnung;
Fig. 2 einen Querschnitt der Schwingungsdämpfungsanordnung aus Figur 1;
Fig. 3 eine Seitenansicht der Figur 1;
Fig. 4 eine perspektivische Querschnittdarstellung der explodierten Schwingungsdämpfungsanordnung der Figur 1;
Fig. 5 eine Querschnittdarstellung der Schwingungsdämpfungsanordnung aus der Figur 1 in Verbindung mit einer Kupplungsscheibenanordnung;
Fig. 6 eine Querschnittdarstellung der Schwingungsdämpfungsanordnung aus der Figur 1 in Verbindung mit einem Kupplungssystem.
Fig. 7 eine Querschnittdarstellung einer Schwingungsdämpfungsanordnung mit alternativem Aufbau

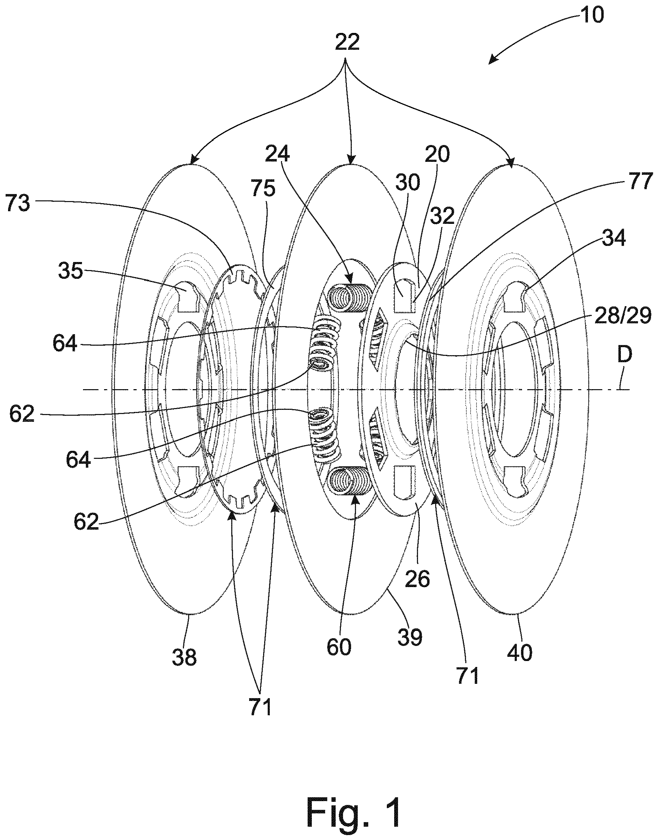

Die Fig. 1 zeigt eine als Tilger ausgebildete Schwingungsdämpfungsanordnung 10 in einer explodierten perspektivischer Ansicht. Dabei umfasst die Schwingungsdämpfungsanordnung 10 einen Auslenkungsmassenträger 20 sowie eine an dem Auslenkungsmassenträger 20 getragene Auslenkungsmassenanordnung 22. Vermittels einer Rückstellkrafterzeugungsanordnung 24 ist die Auslenkungsmassenanordnung 22 am Auslenkungsmassenträger 20 getragen bzw. an diesen angekoppelt.

Der Auslenkungsmassenträger 20 ist hier als eine Zentralscheibe 26 ausgeführt. In ihrem radial inneren Bereich weist die allgemein ringartig aufgebaute Zentralscheibe 26 einen Montagedurchmesser 28 bzw. einen Zentrierdurchmesser 29 auf, um die Zentralscheibe mit einem anderen Bauteil, beispielsweise eine Kupplungsscheibe, hier nicht dargestellt, zu verbinden.

In ihrem radial äußeren Bereich weist die Zentralscheibe 26 eine Mehrzahl von Federfenstern 30 auf, welche in Umfangsrichtung jeweils durch Abstützbereiche 32, 34 für nachfolgend noch beschriebene Federeinheiten 60 begrenzt sind.

Die Zentralscheibe 26 wird zu beiden axialen Seiten von je einer Deckscheibe 38, 40 umgeben. Die Deckscheiben 38, 40 besitzen dabei zu der Zentralscheibe 26 korrespondierende Federfenster 35.

Die Rückstellkrafterzeugungsanordnung 24 umfasst eine Mehrzahl von Federeinheiten 60, die als Einzelfeder oder als geschachtelte Feder ausgeführt sein können, wie hier als Schraubendruckfeder gezeigt. Die Federeinheiten 60 sind jeweils in einem der Federfenster 30 der Zentralscheibe 26 und in jeweils einem der Federfenster 35 der Deckscheiben 38, 40 aufgenommen. Über die Abstützbereiche 32 der Zentralscheibe und der Abstützbereiche 34 der Deckscheiben 38, 40, jeweils an den Federfenstern 30, 35 angeordnet und integral mit der Zentralscheibe 26 bzw. der Deckscheiben 38, 40 ausgebildet, stützen sich die Federeinheiten 60 ab. Dabei sind die Federfenster 30 der Zentralscheibe 26 zu den Federfenstern 35 der Deckscheiben 38, 40 so versetzt, dass zumindest eine Federeinheit 60 in einer Ruhelage in einem vorgespannten Zustand zwischen der Zentralscheibe 26 und den Deckblechen 38, 40 verbaut. Hierdurch wird eine definierte Positionierung der Auslenkungsmassenanordnung 22 bezüglich des Auslenkungsmassenträgers 20 vorgegeben und er erfolgt kein Nulldurchgang der vorgespannten Federeinheit 60, was vorteilhaft für die Lebensdauer der Federeinheit 60 ist, eine degressive Kennlinie ermöglicht und eine radiale Lagerung der Auslenkungsmassenanordnung 22 verbessert.

Radial außerhalb der umfangsmäßig angeordneten Federeinheiten 60 laufen die beiden Deckscheiben 38, 40 zusammen. Dabei werden die beiden zusammengeführten Deckscheiben 38, 40 weiter radial nach außen geführt. Hierdurch entsteht eine axial schmal bauende Auslenkungsmasse mit einem möglichst großen Massenträgheitsmoment. Um das Massenträgheitsmoment weiter bei Bedarf zu erhöhen kann eine zusätzliche Massescheibe 39 zwischen die beiden Deckscheiben 38, 40 gesetzt werden. Dabei können die beiden Deckscheiben 38, 40 oder auch die zusätzliche Massescheibe 39 mittels bekannter Verfahren wie beispielsweise Verschrauben, Verschweißen, Verkleben, Vernieten, Verstemmen drehfest miteinander verbunden werden.

Eine Reibeinrichtung 71, die hier aus einer Federscheibe 73, und zwei Reibscheiben 75, 77 besteht ist radial außerhalb der Federeinheit 60 und axial zwischen den beiden Deckscheiben 38, 40 angebracht. Hierdurch können die Reibscheiben mit einem möglichst großen Durchmesser ausgeführt werden. Dabei stützt sich die Federscheibe 73 zum einen an der einen Deckscheibe 38 und zum anderen an dem Reibring 75 ab, der wiederum sich an der Zentralscheibe 26 abstützt. Der andere Reibring 77 ist zwischen der Zentralscheibe 26 und der anderen Deckscheibe 40 positioniert. Dabei ist die Reibeinrichtung mit der Federscheibe 73 so ausgelegt, dass in einem neuen Zustand der Reibeinrichtung 71 die axial wirkende Kraft der Federscheibe 73 einen Wert aufweist, der ebenfalls in einem Zustand eines maximalen Verschleißes der Reibeinrichtung 71 vorliegt. Dabei ist die typische Kennlinie einer Membranfeder, die hier als Federscheibe 73 verwendet wird von Vorteil, da diese so eingebaut werden kann, dass die axial wirkende Kraft über den Verschleiß erst ansteigt, um dann wieder bis auf die anfängliche Anpresskraft abzufallen.

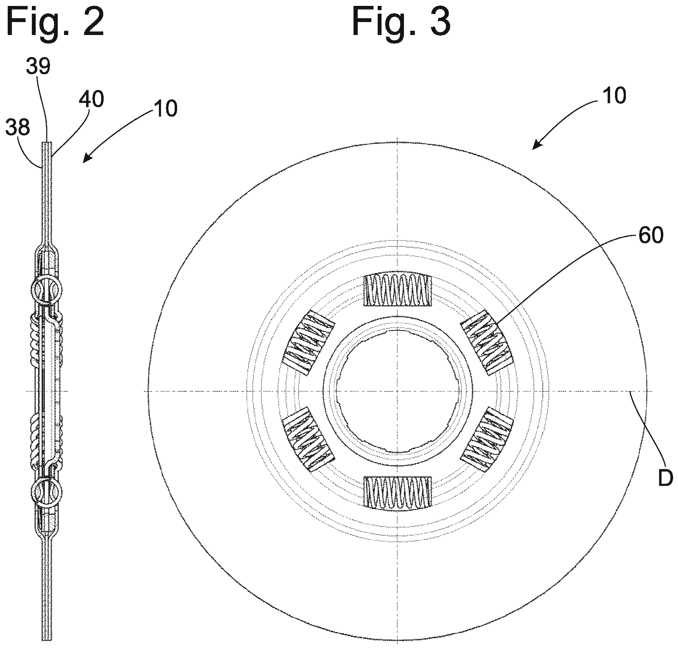

Die Figur 2 zeigt einen Querschnitt der Schwingungsdämpfungsanordnung 10 aus der Figur 1 in einem zusammengebauten Zustand. Hier ist sehr gut zu erkennen, dass die Schwingungsdämpfungsanordnung 10 axial kompakt baut. Weiter ist gut zu erkennen, dass die zusammengeführten Deckscheiben 38, 40 mit der dazwischen liegenden Massescheibe 39 weiter nach radial außen geführt werden, um ein möglichst großes Massenträgheitsmoment bei gleichzeitig geringem axialen Bauraum zu erhalten.

Die Figur 3 zeigt eine Seitenansicht der Schwingungsdämpfungsanordnung 10, wie in der Figur 1 beschrieben und verdeutlich anschaulich die radiale Positionierung der Federeinheit 60 im Verhältnis zu der Auslenkungsmassenanordnung 22.

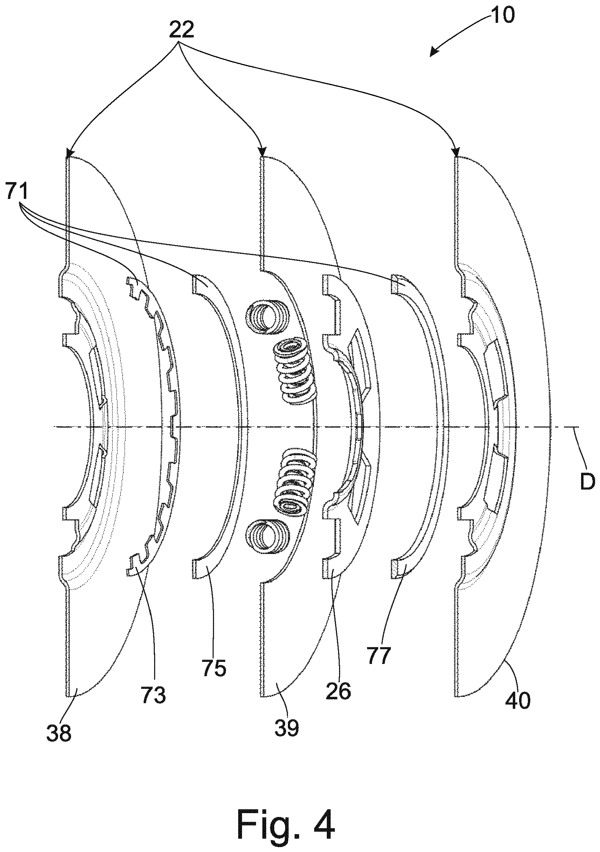

Die Figur 4 zeigt eine perspektivische Querschnittdarstellung der explodierten Schwingungsdämpfungsanordnung 10 der Figur 1. Gut zu sehen ist hier die kompakte Integration der Reibeinrichtung 71, gebildet durch die Federscheibe 73, und die beiden Reibscheiben 75, 77 in einen axialen Bauraum, der von den beiden Deckscheiben 38, 40 begrenzt wird. Dabei übernehmen die Bauteile 73, 75, 77 der Reibeinrichtung 71 auch eine axiale Führung der Auslenkungsmassenanordnung 22, hier gebildet durch die beiden Deckscheiben 38, 40 und die dazwischen positionierten Massescheibe 39 zu der Zentralscheibe 26. Dabei stützt sich die Federscheibe 73 zum einen an der einen Deckscheibe 38 und zum anderen an der einen Reibscheibe 75 ab, die sich wiederum an der Zentralscheibe 26 axial abstützt. Dabei befinden sich die Federscheibe 73 und die eine Reibscheibe 75 an der einen Seitenfläche der Zentralscheibe 26. Auf der anderen Seitenfläche der Zentralscheibe 26 befindet sich die andere Reibscheibe 77, die zum einen sich gegen die Zentralscheibe 26 und zum anderen gegen die andere Deckscheibe 40 abstützt bzw. reibt.

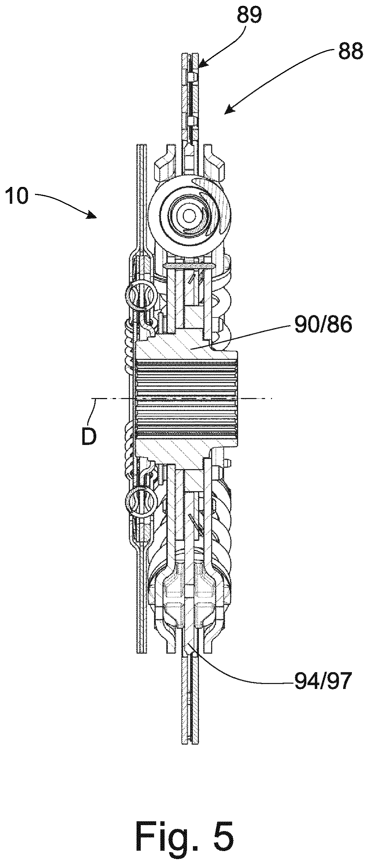

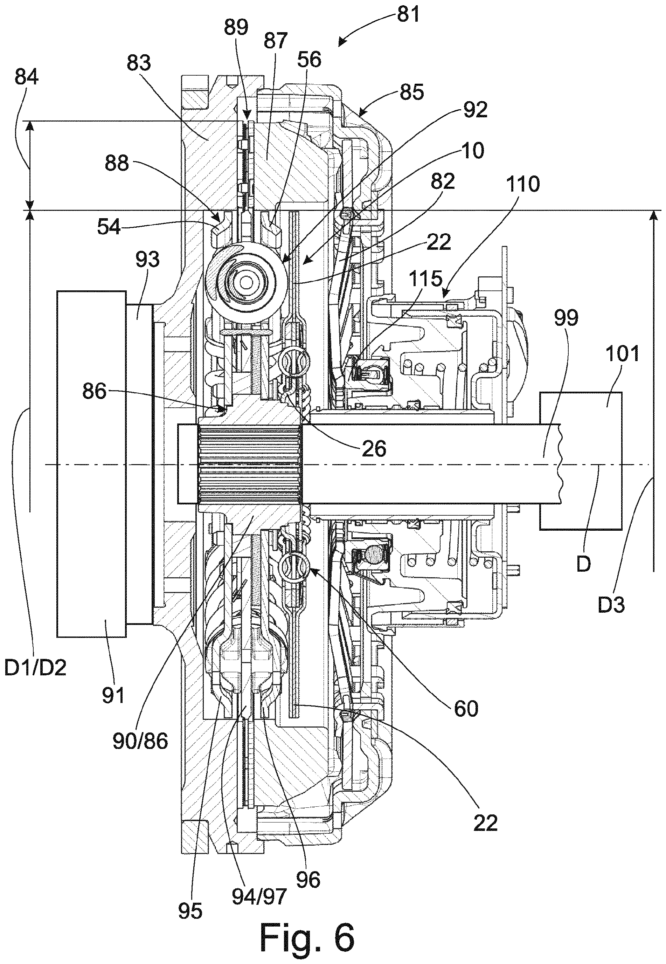

Die Figuren 5 und 6 zeigen eine Querschnittdarstellung der Schwingungsdämpfungsanordnung 10 aus der Figur 1 in Verbindung mit einer Kupplungsscheibenanordnung 88, wobei die Figur 6 diese Einheit von Schwingungsdämpfungsanordnung 10 mit Kupplungsscheibenanordnung 88 noch in einem Umfeld von einem Kupplungssystem 8, zusätzlich zu der Kupplungsscheibenanordnung 88 noch aus einer Schwungmasse 83 und einer Druckplattenanordnung bestehend, in Verbindung mit einem Antriebsaggregat 91 mit einem Ausgangselement und einer Getriebeanordnung 101 mit einer Getriebeeingangswelle 99.

Dabei ist die Kupplungsscheibenanordnung 88 als eine bekannte Ausführungsform mit einer Belaganordnung 89, die drehfest mit einem Eingangselement 94, das hier als ein Zentralscheibenelement 97 ausgebildet ist, verbunden. Ein Ausgangselement 86 der Kupplungsscheibenanordnung 88, das hier als eine Nabe 90 ausgebildet ist, ist drehfest mit der Getriebeeingangswelle 99 der Getriebeanordnung 101 verbunden. Dabei ist die Zentralscheibe 97 relativ zu der Nabe 90 mit an der Nabe 90 befestigten Deckblechen 54, 56 gegen die Wirkkraft einer Federeinheit 92 verdrehbar. Die Belaganordnung 89 mit der Zentralscheibe 97 stellt somit eine Primärseite der Kupplungsscheibenanordnung 88 und die Nabe 90 mit den daran drehfest befestigten Deckblechen 54, 56 die Sekundärseite der Kupplungsscheibenanordnung 88 dar. Die Schwingungsdämpfungsanordnung 10 ist hier mit der Zentralscheibe 26 drehfest mittels bekannter Verbindungsmethoden, wie beispielsweise Verstemmen, Verschrauben, Vernieten oder vergleichbare Verfahren, mit der Nabe 90 der Kupplungsscheibenanordnung 88 drehfest verbunden. Dabei ist die Schwingungsdämpfungsanordnung 10 auf der der Getriebeanordnung 101 zugewandten Seite der Kupplungsscheibenanordnung 88 befestigt. Hier nicht gezeigt, kann die Schwingungsdämpfungsanordnung 10 aber auch an der zu dem Antriebsaggregat 91 zugewandten Seite angeordnet sein.

Die Schwungmasse 83 ist dabei mit dem Ausgangselement 93 des Antriebsaggregates 91 drehfest verbunden. Die Druckplattenanordnung 85, die unter anderem aus einer Druckplatte 87 und einer Membranfeder 82 besteht, ist drehfest mit der Schwungmasse 83 verbunden. Dabei kann die Belaganordnung 89 zwischen einer Reibfläche 84 der Schwungmasse 83 und der Druckplatte 87 eingespannt werden, wobei eine dafür notwendige axiale Einspannkraft von der Membranfeder 82 bereitgestellt wird. Mit einer Ausrückanordnung 110, die hydraulisch und oder pneumatisch betrieben werden kann, kann der Einspannvorgang der Belaganordnung 89 zwischen der Schwungmasse 83 und der Druckplatte 87 gesteuert werden. In der Figur 6 ist weiter vorteilhaft eine Bauraumausnutzung für einen axialen Bauraum zwischen der Kupplungsscheibenanordnung 88 und der Membranfeder 82 zu sehen, der durch die Schwingungsdämpfungsanordnung 10 zumindest teilweise ausgefüllt wird. Um ein möglichst hohes Massenträgheitsmoment der Auslenkungsmassenanordnung 22 der Schwingungsdämpfungsanordnung 10 zu erzielen ist die Auslenkungsmassenanordnung 22 möglichst weit nach radial außen gezogen, was hier mit einem Außendurchmesser D3 der Auslenkungsmassenanordnung 22 dargestellt ist. Dabei bildet hier ein Innendurchmesser D1 der Reibfläche 84 der Schwungmasse 83 und ein Innendurchmesser D2 der Druckplatte 87 einen für die Auslenkungsmassenanordnung 22 maximalen Außendurchmesser.

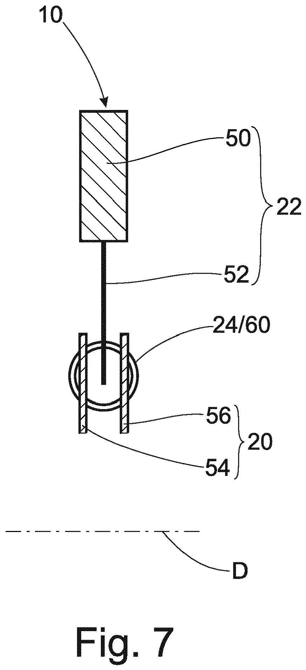

Die Figur 7 zeigt eine Querschnittdarstellung einer Schwingungsdämpfungsanordnung 10 mit alternativem Aufbau aber gleicher Wirkweise wie vorangehend beschrieben.

Dabei ist hier der grundsätzliche Aufbau der Schwingungsdämpfungsanordnung 10 in umgekehrter Weise zu den vorangehend beschriebenen Figuren aufgebaut. Eine Zentralscheibe 52 nimmt einen Massering 50 auf und bildet zusammen die Auslenkungsmassenanordnung 22. Zumindest ein, hier zwei Deckbleche 54, 56 bilden den Auslenkungsmassenträger 20, der gegen eine Rückstellkrafterzeugungsanordnung 24, hier durch eine Federeinheit 60 gebildet, relativ verdrehbar ist. Auch hier kann zwischen dem Auslenkungsmassenträger 20 und der Auslenkungsmassenanordnung 22 eine Reibeinrichtung, hier nicht dargestellt, verbaut sein, mit den vorangehend bereits beschriebenen Eigenschaften.

Mit dem oder den Deckblechen 54, 56 ist die Schwingungsdämpfungsanordnung 10 ebenfalls an der Sekundärseite der Kupplungsscheibenanordnung, hier nicht dargestellt, drehfest verbunden. Dabei können die Deckbleche 54, 56 nach radial innen auch zusammen laufen und miteinander drehfest verbunden werden, hier nicht dargestellt. Die so miteinander verbundenen Deckbleche 54, 56 können dann ebenfalls mit der Sekundärseite der Kupplungsscheibenanordnung drehfest verbunden werden.

### Bezugszeichen

- 10: Schwingungsdämpfungsanordnung
- 20: Auslenkungsmassenträger
- 22: Auslenkungsmassenanordnung
- 24: Rückstellkrafterzeugungsanordnung
- 26: Zentralscheibe
- 28: Montagedurchmesser
- 29: Zentrierdurchmesser
- 30: Federfenster
- 32: Abstützbereich
- 34: Abstützbereich
- 35: Federfenster
- 38: Deckscheibe
- 39: Massescheibe
- 40: Deckscheibe
- 50: Massering
- 52: Zentralscheibe
- 54: Deckblech
- 56: Deckblech
- 60: Federeinheit
- 62: Feder
- 64: Feder
- 71: Reibeinrichtung
- 73: Federscheibe
- 75: Reibscheibe
- 77: Reibscheibe
- 81: Kupplungssystem
- 82: Membranfeder
- 83: Schwungmasse
- 84: Reibfläche
- 85: Druckplattenanordnung
- 86: Ausgangselement
- 87: Druckplatte
- 88: Kupplungsscheibenanordnung
- 89: Belaganordnung
- 90: Nabe
- 91: Antriebsaggregat
- 92: Federeinheit
- 93: Ausgangselement
- 94: Eingangselement
- 95: Deckblech
- 96: Deckblech
- 97: Zentralscheibe
- 99: Getriebeeingangswelle
- 101: Getriebeanordnung
- 110: Ausrückanordnung
- 115: Ausrückring
- D1: Innendurchmesser Reibfläche
- D2: Innendurchmesser Druckplatte
- D3: Außendurchmesser Auslenkungsmassenanordnung
- D: Drehachse

## Patentansprüche

1. Kupplungssystem (81) für ein Fahrzeug, umfassend wenigstens eine Schwingungsdämpfungsanordnung (10), umfassend
einen in Schwingungsbewegung versetzbaren Auslenkungsmassenträger (20) sowie eine an dem Auslenkungsmassenträger (20) getragene Auslenkungsmassenanordnung (22), wobei die Auslenkungsmassenanordnung (22) durch eine Rückstellkrafterzeugungsanordnung (24) mit dem Auslenkungsmassenträger (20) derart gekoppelt ist, dass bei unter einer Schwellenbeschleunigung liegender Beschleunigung des Auslenkungsmassenträgers (20) die Auslenkungsmassenanordnung (22) bezüglich des Auslenkungsmassenträgers (20) in einer Ruhelage im Wesentlichen fest gehalten ist und bei über der Schwellenbeschleunigung liegender Beschleunigung des Auslenkungsmassenträgers (20) die Auslenkungsmassenanordnung (22) gegen eine durch die Rückstellkrafterzeugungsanordnung (24) erzeugte Rückstellkraft und /oder durch eine durch eine Reibeinrichtung (71) erzeugte Haltekraft bezüglich des Auslenkungsmassenträgers (20) aus der Ruhelage auslenkbar ist, wobei
die Auslenkungsmassenanordnung (22) zumindest aus einer Deckscheibe (38; 40) gebildet wird, wobei
eine Baugruppe von Auslenkungsmassenträger (20) und Auslenkungsmassenanordnung (22) eine Zentralscheibe (26) umfasst und dass die zumindest eine Deckscheibe seitlich der Zentralscheibe (26) angeordnet ist, oder/und dass die Rückstellkrafterzeugungsanordnung (24) wenigstens eine in ihren beiden Endbereichen bezüglich der Zentralscheibe (26) und wenigstens einer Deckscheibe (38, 40) abgestützte oder abstützbare Federeinheit (60) umfasst, wobei
wenigstens eine, vorzugsweise jede Federeinheit (60) eine Mehrzahl von parallel wirkenden Federn (62, 64) oder/und eine Mehrzahl von seriell wirkenden Federn (62, 64) umfasst, wobei
die Federn (62, 64) der Federeinheit (60) in ihrer Wirkrichtung in Umfangsrichtung um die Drehachse D angeordnet sind, wobei
die Deckscheiben (38, 40) radial außerhalb der Federeinheit (60) zusammengeführt sind, wobei eine Schwungmasse (83), die mit einem Ausgangselement (93) eines Antriebsaggregates (91) drehfest verbunden ist und eine Reibfläche (84) aufweist, sowie eine Druckplattenanordnung (85) mit einer Druckplatte (87), die drehfest mit der Schwungmasse (83) verbunden ist und durch eine Membranfeder (82) mit einer axialen Kraft beaufschlagt werden kann, sowie einer Ausrückanordnung (110) mit einem Ausrückring (115) für die Membranfeder (82) sowie einer Kupplungsscheibenanordnung (88) umfassend eine Belaganordnung (89), die zwischen der Reibfläche (84) der Schwungmasse (83) und der Druckplatte (87) einklemmbar ist, wobei die Kupplungsscheibenanordnung (88) weiter ein Ausgangselement (86) umfasst, das gegen die Wirkkraft einer Federeinheit (92) und in Wirkverbindung eines Eingangselements (94), welches drehfest mit der Belaganordnung (89) verbunden ist und um die Drehachse (D) verdrehbar ist, wobei das Ausgangselement (86) der Kupplungsscheibenanordnung (88) drehfest mit einer Getriebeeingangswelle (99) einer Getriebeanordnung (101) verbunden ist,
**dadurch gekennzeichnet, dass** die Schwingungsdämpfungsanordnung (10) an der Kupplungsscheibenanordnung (88) auf der der Schwungmassenanordnung (83) zugewandten Seite und/oder auf der der Membranfeder (82) der Druckplattenanordnung (85) zugewandten Seite angeordnet ist.

2. Kupplungssystem (81) nach Anspruch 2, **dadurch gekennzeichnet, dass** die Deckscheiben (38, 40) radial außerhalb der Federeinheit (60) drehfest miteinander verbunden sind.

3. Kupplungssystem (81) nach Anspruch 2, **dadurch gekennzeichnet, dass** die drehfeste Verbindung der Deckscheiben (38, 40) eine Klebeverbindung und / oder eine Schweißverbindung und / oder eine Nietverbindung und / oder eine Verstemmung und / oder eine Verschraubung ist.

4. Kupplungssystem (81) nach einem der Ansprüche 1 bis 3, **dadurch gekennzeichnet, dass** die beiden Deckscheiben (38, 40) baugleich sind.

5. Kupplungssystem (81) nach einem der Ansprüche 2 bis 4, **dadurch gekennzeichnet, dass** zwischen den beiden Deckscheiben (38, 40) eine zusätzliche Massescheibe (39) positioniert ist.

6. Kupplungssystem (81) nach Anspruch 5, **dadurch gekennzeichnet, dass** die Massescheibe (39) drehfest mit den beiden Deckscheiben (38, 40) mittels einer Klebeverbindung und / oder einer Schweißverbindung und / oder einer Nietverbindung und / oder einer Verstemmung und / oder einer Verschraubung verbunden ist.

7. Kupplungssystem (81) nach einem der Ansprüche 1 bis 6, **dadurch gekennzeichnet, dass** eine Reibeinrichtung (71) zwischen den beiden Deckscheiben (38, 40) positioniert ist.

8. Kupplungssystem (81) nach Anspruch 7, **dadurch gekennzeichnet, dass** die Reibeinrichtung (71) zumindest eine Federscheibe (73) umfasst, wobei die Federscheibe (73) sich einerseits an einer der beiden Deckscheiben (38, 40) und andererseits an der Zentralscheibe (26) abstützt.

9. Kupplungssystem (81) nach Anspruch 7 oder 8, **dadurch gekennzeichnet, dass** die Reibeinrichtung (71) zumindest eine zusätzliche Reibscheibe (75, 77) umfasst.

10. Kupplungssystem (81) nach einem der Ansprüche 7 - 9, **dadurch gekennzeichnet, dass** die Reibeinrichtung (71) radial außerhalb der Federeinheit (60) angeordnet ist.

11. Kupplungssystem (81) nach einem der Ansprüche 7 - 9, **dadurch gekennzeichnet, dass** die Reibeinrichtung (71) radial innerhalb der Feder-einheit (60) angeordnet ist.

12. Kupplungssystem (81) nach einem der Ansprüche 7 - 11, **dadurch gekennzeichnet, dass** eine axiale Kraft der Federscheibe (73) der Reibeinrichtung (71) in eingebautem Neuzustand nahezu gleich einer axialen Kraft der Federscheibe (73) der Reibeinrichtung (71) in einem maximalen Verschleißzustand ist.

13. Kupplungssystem (81) nach einem der Ansprüche 1 - 12, **dadurch gekennzeichnet, dass** das Vorspannmoment der Federeinheit (60) maximal dem Produkt aus maximaler Eingangswellenbeschleunigung und der Massenträgheit der Schwingungsdämpfungsanordnung (10) entspricht.

14. Kupplungssystem (81) nach einem der Ansprüche 1 - 13, **dadurch gekennzeichnet, dass** ein Wert des Coulombschen Reibmoments der Reibeinrichtung (71) maximal dem Produkt aus maximaler Eingangswellenbeschleunigung und der Massenträgheit der Schwingungsdämpfungsanordnung (10) entspricht.

15. Kupplungssystem (81) nach einem der Ansprüche 1 - 14, **dadurch gekennzeichnet, dass** eine Kennlinie der Rückstellkrafterzeugungsanordnung (24) mehrstufig oder stufenlos degressiv verläuft.

16. Kupplungssystem (81) nach einem der Ansprüche 1 - 15, **dadurch gekennzeichnet, dass** eine Kennlinie der Rückstellkrafterzeugungsanordnung (24) mehrstufig oder stufenlos progressiv verläuft.

17. Kupplungssystem (81) nach einem der Ansprüche 1 - 16, **dadurch gekennzeichnet, dass** die Federeinheit (60) aus Schraubenfedern und/oder aus Kunststofffedern und/oder aus Blattfedern besteht.

18. Kupplungssystem (81) nach einem der Ansprüche 1 bis 17, **dadurch gekennzeichnet, dass** der Auslenkungsmassenträger (20) der Schwingungsdämpfungsanordnung (10) drehfest mit dem Ausgangselement (86) der Kupplungsscheibenanordnung (88) oder drehfest mit der Getriebeeingangswelle (99) verbunden ist.

19. Kupplungssystem (81) nach einem der Ansprüche 1 bis 18, **dadurch gekennzeichnet, dass** die drehfeste Verbindung des Auslenkungsmassenträgers (20) mit dem Ausgangselement (86) der Kupplungsscheibenanordnung (88) oder der Getriebeeingangswelle (99) durch eine Verzahnung oder/ und durch eine Vernietung oder/und durch eine Verschweißung oder/und durch ein Verstemmen oder/und durch ein Verschrauben oder/und durch eine Verklebung erfolgt.

20. Kupplungssystem (81) nach einem der Ansprüche 1 bis 19, **dadurch gekennzeichnet, dass** die geringste axiale Erstreckung der Auslenkungsmassenanordnung (22) sich radial außerhalb des Ausrückringes (115) befindet.

21. Kupplungssystem (81) nach einem der Ansprüche 1 bis 19, **dadurch gekennzeichnet, dass** die geringste axiale Erstreckung der Auslenkungsmassenanordnung (22) sich im radialen Bereich der Federeinheit (92) der Kupplungsscheibenanordnung (88) befindet.

22. Kupplungssystem (81) nach einem der Ansprüche 1 bis 21, **dadurch gekennzeichnet, dass** die Federeinheit (60) der Schwingungsdämpfungsanordnung (10) radial innerhalb der Federeinheit (92) der Kupplungsscheibenanordnung (88) angeordnet ist.

23. Kupplungssystem (81) nach einem der Ansprüche 1 bis 22, **dadurch gekennzeichnet, dass** ein Außendurchmesser (D3) der Auslenkungsmassenanordnung (22) geringer ist als ein Innendurchmesser (D1) der Reibfläche (84) der Schwungmasse (83) oder geringer ist als ein Innendurchmesser (D2) der Druckplatte (87).

24. Kupplungssystem (81) nach einem der Ansprüche 1 bis 23, **dadurch gekennzeichnet, dass** der Außendurchmesser (D3) der Auslenkungsmassenanordnung (22) das Produkt von einem Faktor 0,9 bis 1,1 und dem Außendurchmesser der Deckbleche (95, 96) der Kupplungsscheibenanordnung (88) ist.

25. Kupplungssystem (81) nach einem der Ansprüche 1 bis 24, **dadurch gekennzeichnet, dass** der Außendurchmesser (D3) der Auslenkungsmassenanordnung (22) 0,9 bis 1,1 mal dem Innendurchmesser der Belaganordnung (89) der Kupplungsscheibenanordnung (88) ist.

26. Kupplungssystem (81) nach einem der Ansprüche 1 bis 25, **dadurch gekennzeichnet, dass** ein Massenträgheitsmoment der Schwingungsdämpfungsanordnung (10) zwischen 15% und 25% der Gesamtmassenträgheit von der Schwingungsdämpfungsanordnung (10) und der Kupplungsscheibenanordnung (88) beträgt.

27. Kupplungssystem (81) nach einem der Ansprüche 1 bis 26, **dadurch gekennzeichnet, dass** die Schwingungsdämpfungsanordnung (10) auf eine Rassel-Eigenfrequenz abgestimmt wird.

28. Kupplungssystem (81) nach einem der Ansprüche 1 bis 27, **dadurch gekennzeichnet, dass** die Schwingungsdämpfungsanordnung (10) auf eine Eigenfrequenz von 25 bis 60 Hz abgestimmt wird.

29. Kupplungssystem (81) nach einem der Ansprüche 1 bis 28, **dadurch gekennzeichnet, dass** ein Massenträgheitsmoment der Auslenkungsmassenanordnung (22) für Fahrzeuge mit einem Eingangsdrehmoment des Antriebsaggregates (91) von mehr als 3000 Nm zwischen 0,02 kgm² und 0,1 kgm² beträgt.

30. Kupplungssystem (81) nach einem der Ansprüche 1 bis 29, **dadurch gekennzeichnet, dass** ein Massenträgheitsmoment der Auslenkungsmassenanordnung (22) für Fahrzeuge mit einem Eingangsdrehmoment des Antriebsaggregates (91) von mehr als 2000 Nm und weniger als 3000Nm zwischen 0,01 kgm² und 0,06 kgm² beträgt.

## Claims

1. Clutch system (81) for a vehicle, comprising at least one vibration damping arrangement (10), comprising a deflection mass carrier (20) which can be set in a vibrating movement, and a deflection mass arrangement (22) which is supported on the deflection mass carrier (20), the deflection mass arrangement (22) being coupled to the deflection mass carrier (20) by way of a restoring force generating arrangement (24) in such a way that, in the case of an acceleration of the deflection mass carrier (20) which lies below a threshold acceleration, the deflection mass arrangement (22) is held substantially fixedly in a rest position with regard to the deflection mass carrier (20) and, in the case of an acceleration of the deflection mass carrier (20) which lies above the threshold acceleration, the deflection mass arrangement (22) can be deflected out of the rest position with regard to the deflection mass carrier (20) counter to a restoring force, which is generated by way of the restoring force generating arrangement (24), and/or by way of a holding force which is generated by way of a friction device (71),
the deflection mass arrangement (22) being formed at least from a cover disc (38; 40),
an assembly of deflection mass carrier (20) and deflection mass arrangement (22) comprising a central disc (26), and that the at least one cover disc is arranged to the side of the central disc (26), and/or that the restoring force generating arrangement (24) comprises at least one spring unit (60) which is supported or can be supported in its two end regions with regard to the central disc (26) and at least one cover disc (38, 40),
at least one, preferably every, spring unit (60) comprising a plurality of springs (62, 64) which act in parallel and/or a plurality of springs (62, 64) which act in series,
the springs (62, 64) of the spring unit (60) being arranged in their direction of action in the circumferential direction about the rotational axis D,
the cover discs (38, 40) being brought together radially outside the spring unit (60), a flywheel mass (83), which is connected fixedly to an output element (93) of a drive unit (91) for conjoint rotation and has a friction face (84), and a pressure plate arrangement (85) with a pressure plate (87), which is connected fixedly to the flywheel mass (83) for conjoint rotation and can be loaded with an axial force by way of a diaphragm spring (82), and with a release arrangement (110) with a release ring (115) for the diaphragm spring (82), and with a clutch disc arrangement (88) comprising a lining arrangement (89) which can be clamped in between the friction face (84) of the flywheel mass (83) and the pressure plate (87), the clutch disc arrangement (88) comprising, furthermore, an output element (86) which counter to the effective force of a spring unit (92) and in operative connection of an input element (94) which is connected fixedly to the lining arrangement (89) for conjoint rotation and can be rotated about the rotational axis (D), the output element (86) of the clutch disc arrangement (88) being connected fixedly to a transmission input shaft (99) of a transmission arrangement (101) for conjoint rotation,
**characterized in that** the vibration damping arrangement (10) is arranged on the clutch disc arrangement (88) on the side which faces the vibration mass arrangement (83) and/or on the side which faces the diaphragm spring (82) of the pressure plate arrangement (85).

2. Clutch system (81) according to Claim 2, **characterized in that** the cover discs (38, 40) are connected fixedly to one another radially outside the spring unit (60) for conjoint rotation.

3. Clutch system (81) according to Claim 2, **characterized in that** the fixed connection for conjoint rotation of the cover discs (38, 40) is an adhesive bond and/or a welded joint and/or a riveted connection and/or a caulked connection and/or a screw connection.

4. Clutch system (81) according to one of Claims 1 to 3, **characterized in that** the two cover discs (38, 40) are structurally identical.

5. Clutch system (81) according to one of Claims 2 to 4, **characterized in that** an additional mass disc (39) is positioned between the two cover discs (38, 40).

6. Clutch system (81) according to Claim 5, **characterized in that** the mass disc (39) is connected fixedly to the two cover discs (38, 40) for conjoint rotation by means of an adhesive bond and/or a welded joint and/or a riveted connection and/or a caulked connection and/or a screw connection.

7. Clutch system (81) according to one of Claims 1 to 6, **characterized in that** a friction device (71) is positioned between the two cover discs (38, 40).

8. Clutch system (81) according to Claim 7, **characterized in that** the friction device (71) comprises at least one spring disc (73), the spring disc (73) being supported on one side on one of the two cover discs (38, 40) and on the other side on the central disc (26).

9. Clutch system (81) according to Claim 7 or 8, **characterized in that** the friction device (71) comprises at least one additional friction disc (75, 77).

10. Clutch system (81) according to one of Claims 7 to 9, **characterized in that** the friction device (71) is arranged radially outside the spring unit (60).

11. Clutch system (81) according to one of Claims 7 to 9, **characterized in that** the friction device (71) is arranged radially inside the spring unit (60).

12. Clutch system (81) according to one of Claims 7 to 11, **characterized in that** an axial force of the spring disc (73) of the friction device (71) in the installed new state is virtually identical to an axial force of the spring disc (73) of the friction device (71) in a maximum wear state.

13. Clutch system (81) according to one of Claims 1 to 12, **characterized in that** the pretensioning torque of the spring unit (60) corresponds to at most the product of a maximum input shaft acceleration and the mass moment of inertia of the vibration damping arrangement (10).

14. Clutch system (81) according to one of Claims 1 to 13, **characterized in that** a value of the Coulomb frictional torque of the friction device (71) corresponds to at most the product of a maximum input shaft acceleration and the mass moment of inertia of the vibration damping arrangement (10).

15. Clutch system (81) according to one of Claims 1 to 14, **characterized in that** a characteristic curve of the restoring force generating arrangement (24) runs in multiple steps or degressively without steps.

16. Clutch system (81) according to one of Claims 1 to 15, **characterized in that** a characteristic curve of the restoring force generating arrangement (24) runs in multiple steps or progressively without steps.

17. Clutch system (81) according to one of Claims 1 to 16, **characterized in that** the spring unit (60) consists of helical springs and/or of plastic springs and/or of leaf springs.

18. Clutch system (81) according to one of Claims 1 to 17, **characterized in that** the deflection mass carrier (20) of the vibration damping arrangement (10) is connected fixedly to the output element (86) of the clutch disc arrangement (88) for conjoint rotation or is connected fixedly to the transmission input shaft (99) for conjoint rotation.

19. Clutch system (81) according to one of Claims 1 to 18, **characterized in that** the fixed connection for conjoint rotation of the deflection mass carrier (20) to the output element (86) of the clutch disc arrangement (88) or the transmission input shaft (99) takes place by way of a spline connection and/or by way of a riveted connection and/or by way of a welded joint and/or by way of a caulked connection and/or by way of a screw connection and/or by way of an adhesive bond.

20. Clutch system (81) according to one of Claims 1 to 19, **characterized in that** the smallest axial extent of the deflecting mass arrangement (22) is situated radially outside the release ring (115).

21. Clutch system (81) according to one of Claims 1 to 19, **characterized in that** the smallest axial extent of the deflecting mass arrangement (22) is situated in the radial region of the spring unit (92) of the clutch disc arrangement (88).

22. Clutch system (81) according to one of Claims 1 to 21, **characterized in that** the spring unit (60) of the vibration damping arrangement (10) is arranged radially inside the spring unit (92) of the clutch disc arrangement (88).

23. Clutch system (81) according to one of Claims 1 to 22, **characterized in that** an external diameter (D3) of the deflecting mass arrangement (22) is smaller than an internal diameter (D1) of the friction face (84) of the flywheel mass (83) or is smaller than an internal diameter (D2) of the pressure plate (87).

24. Clutch system (81) according to one of Claims 1 to 23, **characterized in that** the external diameter (D3) of the deflecting mass arrangement (22) is the product of a factor of from 0.9 to 1.1 and the external diameter of the covering plates (95, 96) of the clutch disc arrangement (88).

25. Clutch system (81) according to one of Claims 1 to 24, **characterized in that** the external diameter (D3) of the deflecting mass arrangement (22) is from 0.9 to 1.1 times the internal diameter of the lining arrangement (89) of the clutch disc arrangement (88).

26. Clutch system (81) according to one of Claims 1 to 25, **characterized in that** a mass moment of inertia of the vibration damping arrangement (10) is between 15% and 25% of the total mass moment of inertia from the vibration damping arrangement (10) and the clutch disc arrangement (88) .

27. Clutch system (81) according to one of Claims 1 to 26, **characterized in that** the vibration damping arrangement (10) is tuned to a resonant rattle frequency.

28. Clutch system (81) according to one of Claims 1 to 27, **characterized in that** the vibration damping arrangement (10) is tuned to a resonant frequency of from 25 to 60 Hz.

29. Clutch system (81) according to one of Claims 1 to 28, **characterized in that** a mass moment of inertia of the deflecting mass arrangement (22) for vehicles with an input torque of the drive unit (91) of more than 3000 Nm is between 0.02 kgm² and 0.1 kgm².

30. Clutch system (81) according to one of Claims 1 to 29, **characterized in that** a mass moment of inertia of the deflecting mass arrangement (22) for vehicles with an input torque of the drive unit (91) of more than 2000 Nm and less than 3000 Nm is between 0.01 kgm² and 0.06 kgm².

## Revendications

1. Système d'embrayage (81) pour un véhicule, comportant au moins un ensemble d'amortissement des vibrations (10), comportant
un support de masses de déviation (20) pouvant être animé d'un mouvement vibratoire ainsi qu'un ensemble de masses de déviation (22) supporté sur le support de masses de déviation (20), l'ensemble de masses de déviation (22) étant accouplé au support de masses de déviation (20) au moyen d'un ensemble de génération de force de rappel (24), de telle sorte qu'en cas d'accélération du support de masses de déviation (20) inférieure à une accélération seuil, l'ensemble de masses de déviation (22) est maintenu de manière sensiblement fixe dans une position de repos par rapport au support de masses de déviation (20) et qu'en cas d'accélération du support de masses de déviation (20) supérieure à l'accélération seuil, l'ensemble de masses de déviation (22) peut être dévié hors de la position de repos par rapport au support de masses de déviation (20) à l'encontre d'une force de rappel générée par l'ensemble de génération de force de rappel (24) et/ou par une force de maintien générée par un dispositif de friction (71),
l'ensemble de masses de déviation (22) étant formé au moins à partir d'un disque de recouvrement (38 ; 40), un module constitué du support de masses de déviation (20) et de l'ensemble de masses de déviation (22) comportant un disque central (26) et que l'au moins un disque de recouvrement est disposé latéralement par rapport au disque central (26), et/ou que l'ensemble de génération de force de rappel (24) comporte au moins une unité à ressorts (60) supportée ou pouvant être supportée dans ses deux régions d'extrémité par rapport au disque central (26) et à au moins un disque de recouvrement (38, 40),
au moins une, de préférence chaque unité à ressorts (60) comportant une pluralité de ressorts (62, 64) agissant en parallèle et/ou une pluralité de ressorts (62, 64) agissant en série,
les ressorts (62, 64) de l'unité à ressorts (60) étant disposés avec leur direction d'action dans la direction périphérique autour de l'axe de rotation D,
les disques de recouvrement (38, 40) étant réunis radialement à l'extérieur de l'unité à ressorts (60), une masse d'inertie (83), qui est reliée de manière solidaire en rotation à un élément de sortie (93) d'un groupe motopropulseur (91) et comprend une surface de friction (84), ainsi qu'un ensemble à plateau de pression (85) comportant un plateau de pression (87), qui est relié de manière solidaire en rotation à la masse d'inertie (83) et peut être soumis à une force axiale par un ressort à membrane (82), ainsi qu'un ensemble de débrayage (110) comportant une bague de débrayage (115) pour le ressort à membrane (82) ainsi qu'un ensemble de disques d'embrayage (88) comportant un ensemble de garniture (89), qui peut être serré entre la surface de friction (84) de la masse d'inertie (83) et le plateau de pression (87), l'ensemble de disques d'embrayage (88) comportant en outre un élément de sortie (86), qui à l'encontre de la force d'action d'une unité à ressorts (92) et en liaison fonctionnelle avec un élément d'entrée (94), lequel est relié de manière solidaire en rotation à l'ensemble de garniture (89) et peut tourner autour de l'axe de rotation (D), l'élément de sortie (86) de l'ensemble de disques d'embrayage (88) étant relié de manière solidaire en rotation à un arbre d'entrée de transmission (99) d'un ensemble de transmission (101),
**caractérisé en ce que** l'ensemble d'amortissement des vibrations (10) est disposé au niveau de l'ensemble de disques d'embrayage (88) sur le côté tourné vers l'ensemble de masses d'inertie (83) et/ou sur le côté tourné vers le ressort à membrane (82) de l'ensemble à plateau de pression (85).

2. Système d'embrayage (81) selon la revendication 2, **caractérisé en ce que** les disques de recouvrement (38, 40) sont reliés l'un à l'autre de manière solidaire en rotation radialement à l'extérieur de l'unité à ressorts (60).

3. Système d'embrayage (81) selon la revendication 2, **caractérisé en ce que** la liaison solidaire en rotation des disques de recouvrement (38, 40) est une liaison par collage et/ou une liaison par soudage et/ou une liaison par rivetage et/ou un matage et/ou un vissage.

4. Système d'embrayage (81) selon l'une des revendications 1 à 3, **caractérisé en ce que** les deux disques de recouvrement (38, 40) sont de construction identique.

5. Système d'embrayage (81) selon l'une des revendications 2 à 4, **caractérisé en ce qu'**un disque de masse (39) supplémentaire est positionné entre les deux disques de recouvrement (38, 40).

6. Système d'embrayage (81) selon la revendication 5, **caractérisé en ce que** le disque de masse (39) est relié de manière solidaire en rotation aux deux disques de recouvrement (38, 40) par le biais d'une liaison par collage et/ou d'une liaison par soudage et/ou d'une liaison par rivetage et/ou d'un matage et/ou d'un vissage.

7. Système d'embrayage (81) selon l'une des revendications 1 à 6, **caractérisé en ce qu'**un dispositif de friction (71) est positionné entre les deux disques de recouvrement (38, 40).

8. Système d'embrayage (81) selon la revendication 7, **caractérisé en ce que** le dispositif de friction (71) comporte au moins une rondelle ressort (73), la rondelle ressort (73) s'appuyant d'un côté sur l'un des deux disques de recouvrement (38, 40) et de l'autre côté sur le disque central (26).

9. Système d'embrayage (81) selon la revendication 7 ou 8, **caractérisé en ce que** le dispositif de friction (71) comporte au moins un disque de friction (75, 77) supplémentaire.

10. Système d'embrayage (81) selon l'une des revendications 7 à 9, **caractérisé en ce que** le dispositif de friction (71) est disposé radialement à l'extérieur de l'unité à ressorts (60).

11. Système d'embrayage (81) selon l'une des revendications 7 à 9, **caractérisé en ce que** le dispositif de friction (71) est disposé radialement à l'intérieur de l'unité à ressorts (60).

12. Système d'embrayage (81) selon l'une des revendications 7 à 11, **caractérisé en ce qu'**une force axiale de la rondelle ressort (73) du dispositif de friction (71) dans l'état neuf installé est pratiquement égale à une force axiale de la rondelle ressort (73) du dispositif de friction (71) dans un état d'usure maximal.

13. Système d'embrayage (81) selon l'une des revendications 1 à 12, **caractérisé en ce que** le couple de précontrainte de l'unité à ressorts (60) correspond au maximum au produit de l'accélération d'arbre d'entrée maximale et de l'inertie de masse de l'ensemble d'amortissement des vibrations (10).

14. Système d'embrayage (81) selon l'une des revendications 1 à 13, **caractérisé en ce qu'**une valeur du couple de friction de Coulomb du dispositif de friction (71) correspond au maximum au produit de l'accélération d'arbre d'entrée maximale et de l'inertie de masse de l'ensemble d'amortissement des vibrations (10) .

15. Système d'embrayage (81) selon l'une des revendications 1 à 14, **caractérisé en ce qu'**une courbe caractéristique de l'ensemble de génération de force de rappel (24) s'étend de manière dégressive sur plusieurs niveaux ou de façon continue.

16. Système d'embrayage (81) selon l'une des revendications 1 à 15, **caractérisé en ce qu'**une courbe caractéristique de l'ensemble de génération de force de rappel (24) s'étend de manière progressive sur plusieurs niveaux ou de façon continue.

17. Système d'embrayage (81) selon l'une des revendications 1 à 16, **caractérisé en ce que** l'unité à ressorts (60) est constituée de ressorts hélicoïdaux et/ou de ressorts en matière synthétique et/ou de ressorts à lames.

18. Système d'embrayage (81) selon l'une des revendications 1 à 17, **caractérisé en ce que** le support de masses de déviation (20) de l'ensemble d'amortissement des vibrations (10) est relié de manière solidaire en rotation à l'élément de sortie (86) de l'ensemble de disques d'embrayage (88) ou de manière solidaire en rotation à l'arbre d'entrée de transmission (99).

19. Système d'embrayage (81) selon l'une des revendications 1 à 18, **caractérisé en ce que** la liaison solidaire en rotation du support de masses déviation (20) à l'élément de sortie (86) de l'ensemble de disques d'embrayage (88) ou à l'arbre d'entrée de transmission (99) s'effectue par un engrènement et/ou par un rivetage et/ou par un soudage et/ou par un matage et/ou par un vissage et/ou par un collage.

20. Système d'embrayage (81) selon l'une des revendications 1 à 19, **caractérisé en ce que** l'étendue axiale la plus petite de l'ensemble de masses de déviation (22) se trouve radialement à l'extérieur de la bague de débrayage (115).

21. Système d'embrayage (81) selon l'une des revendications 1 à 19, **caractérisé en ce que** l'étendue axiale la plus petite de l'ensemble de masses de déviation (22) se trouve dans la région radiale de l'unité à ressorts (92) de l'ensemble de disques d'embrayage (88).

22. Système d'embrayage (81) selon l'une des revendications 1 à 21, **caractérisé en ce que** l'unité à ressorts (60) de l'ensemble d'amortissement des vibrations (10) est disposée radialement à l'intérieur de l'unité à ressorts (92) de l'ensemble de disques d'embrayage (88).

23. Système d'embrayage (81) selon l'une des revendications 1 à 22, **caractérisé en ce qu'**un diamètre extérieur (D3) de l'ensemble de masses de déviation (22) est inférieur à un diamètre intérieur (D1) de la surface de friction (84) de la masse d'inertie (83) ou est inférieur à un diamètre intérieur (D2) du plateau de pression (87).

24. Système d'embrayage (81) selon l'une des revendications 1 à 23, **caractérisé en ce que** le diamètre extérieur (D3) de l'ensemble de masses de déviation (22) est le produit d'un facteur de 0,9 à 1,1 et du diamètre extérieur des tôles de recouvrement (95, 96) de l'ensemble de disques d'embrayage (88).

25. Système d'embrayage (81) selon l'une des revendications 1 à 24, **caractérisé en ce que** le diamètre extérieur (D3) de l'ensemble de masses de déviation (22) est 0,9 à 1,1 fois le diamètre intérieur de l'ensemble de garniture (89) de l'ensemble de disques d'embrayage (88).

26. Système d'embrayage (81) selon l'une des revendications 1 à 25, **caractérisé en ce qu'**un moment d'inertie de masse de l'ensemble d'amortissement des vibrations (10) vaut entre 15% et 25% de l'inertie de masse totale de l'ensemble d'amortissement des vibrations (10) et de l'ensemble de disques d'embrayage (88).

27. Système d'embrayage (81) selon l'une des revendications 1 à 26, **caractérisé en ce que** l'ensemble d'amortissement des vibrations (10) est réglé sur une fréquence propre de cliquetis.

28. Système d'embrayage (81) selon l'une des revendications 1 à 27, **caractérisé en ce que** l'ensemble d'amortissement des vibrations (10) est réglé sur une fréquence propre 25 à 60 Hz.

29. Système d'embrayage (81) selon l'une des revendications 1 à 28, **caractérisé en ce qu'**un moment d'inertie de masse de l'ensemble de masses déviation (22) pour des véhicules présentant un couple d'entrée du groupe motopropulseur (91) de plus de 3000 Nm vaut entre 0,02 kgm² et 0,1 kgm².

30. Système d'embrayage (81) selon l'une des revendications 1 à 29, **caractérisé en ce qu'**un moment d'inertie de masse de l'ensemble de masses déviation (22) pour des véhicules présentant un couple d'entrée du groupe motopropulseur (91) de plus de 2000 Nm et de moins de 3000 Nm vaut entre 0,01 kgm² et 0,06 kgm².
